# EUROPÄISCHE PATENTSCHRIFT

(11) **EP 1 515 161 B1**
(45) Veröffentlichungstag und Bekanntmachung des Hinweises auf die Patenterteilung: **18.04.2012**
(21) Anmeldenummer: 04104355.5
(22) Anmeldetag: 09.09.2004
(51) Int. Cl.: G01S 17/10, G01S 17/42, G01S 17/89, G01S 7/481

(54) **Optischer Entfernungsmesser und Verfahren zur Bestimmung der Entfernung zwischen einem Objekt und einem Referenzpunkt**
Optical range finder and corresponding method
Télémètre et procédé correspondant

(30) Priorität: 15.09.2003 US 662867
(43) Veröffentlichungstag der Anmeldung: 16.03.2005
(73) Patentinhaber: DEERE & COMPANY, Moline, Illinois 61265-8098 (US)
(72) Erfinder: Anderson, Noel Wayne, Fargo, ND 58102 (US); Thackray, Robert George, Fargo, ND 58103 (US)
(74) Vertreter: Holst, Sönke

(56) Entgegenhaltungen:
- EP-A- 1 221 582
- EP-A- 1 310 764
- EP-A- 1 321 777
- DE-A- 19 608 632
- US-A- 4 298 280
- US-A- 5 638 164
- RUFFIN P B: "Optical MEMS-based arrays" PROCEEDINGS OF THE SPIE - THE INTERNATIONAL SOCIETY FOR OPTICAL ENGINEERING SPIE-INT. SOC. OPT. ENG USA, Bd. 5055, Juli 2003 (2003-07), Seiten 230-241, XP002310629 ISSN: 0277-786X
- FAINMAN Y ET AL: "3D quantitative imaging of the microvasculature with the Texas Instruments digital micromirror device" PROCEEDINGS OF THE SPIE - THE INTERNATIONAL SOCIETY FOR OPTICAL ENGINEERING SPIE-INT. SOC. OPT. ENG USA, Bd. 4457, August 2001 (2001-08), Seiten 137-144, XP002310630 ISSN: 0277-786X
- ANAGNOSTOPOULOS G P ET AL: "The electronics of a control system for micromirrors in a laser-scanning device" ICECS 2002. 9TH IEEE INTERNATIONAL CONFERENCE ON ELECTRONICS, CIRCUITS AND SYSTEMS, Bd. 3, 15. September 2002 (2002-09-15), Seiten 1207-1210, XP010614572 PISCATAWAY, NJ, USA
- OLLIS M ET AL: "First results in vision-based crop line tracking" ROBOTICS AND AUTOMATION, 1996. PROCEEDINGS., 1996 IEEE INTERNATIONAL CONFERENCE ON MINNEAPOLIS, MN, USA 22-28 APRIL 1996, NEW YORK, NY, USA,IEEE, US, 22. April 1996 (1996-04-22), Seiten 951-956, XP010162869 ISBN: 0-7803-2988-0
- JIMENEZ A R ET AL: "Automatic fruit recognition: a survey and new results using Range/Attenuation images" PATTERN RECOGNITION, ELSEVIER, KIDLINGTON, GB, Bd. 32, Nr. 10, Oktober 1999 (1999-10), Seiten 1719-1736, XP004171577 ISSN: 0031-3203
- ARANA-AREJOLALEIBA N ET AL: "A smart sensor based visual landmarks detection for indoor robot navigation" PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, 11. August 2002 (2002-08-11), Seiten 848-851, XP010614012 ISBN: 0-7695-1695-X
- ARANA-AREJOLALEIBA N ET AL: "A 3D laser micro-sensor integrating control and data processing in an FPGA-based calculator" PROCEEDINGS THIRD INTERNATIONAL CONFERENCE ON 3-D DIGITAL IMAGING AND MODELING, 28. Mai 2001 (2001-05-28), Seiten 107-114, XP010542854 IEEE, LOS ALAMITOS, CA, USA

## Beschreibung

Die Erfindung betrifft einen optischen Entfernungsmesser und ein Verfahren zur Bestimmung der Entfernung zwischen einem Objekt und einem Referenzpunkt.

Ein Entfernungsmesser ist ein Instrument oder Gerät, das zur Bestimmung der Entfernung eines Objekts von einem Bezugspunkt verwendet wird. Im Stand der Technik verwendet ein Laser-Entfernungsmesser einen rotierenden Spiegelzusammenbau, um die Richtung eines vom Laser-Entfernungsmesser abgesandten Strahls vorzugeben. Er kann einen mechanisch angesteuerten Spiegel aufweisen, der einen bestimmten, erforderlichen Bewegungsbereich überstreicht, um eine gewünschte Einstellung oder Winkelposition zu erreichen. Da derartige mechanische Scanner einen bestimmten Bewegungsbereich überstreichen müssen, um eine gewünschte Bewegung des Laser- oder Lichtstrahls zu erreichen, ist die tatsächliche Antwortzeit des mechanischen Scanners größer als für bestimmte Anwendungen wünschenswert wäre, z. B. für die Fahrzeuglenkung. Um die Abtastrate des mechanischen Scanners zu vergrößern, kann das Licht einer Laserquelle von einem mehrseitigen drehenden Spiegel oder Prisma reflektiert werden, um einen breiteren Winkelbereich des Bildfelds der Laserquelle über eine Fläche zu erzeugen. Die rotierende Spiegelanordnung ist jedoch kostenaufwändig herzustellen und für mechanische Fehler empfindlich, wie Stöße oder Vibrationen, die Risse im Spiegel verursachen oder seine Ausrichtung verändern.

Wenn der Laser-Entfernungsmesser in einer landwirtschaftlichen Umgebung Staub oder anderen Feststoffpartikeln ausgesetzt ist, kann der Bewegungsbereich des Laser-Entfernungsmessers begrenzt und dadurch die Leistung vermindert werden. Vibrationen des Laser-Entfernungsmessers können zu mechanischem Versagen einer oder mehrerer Verbindungen im drehenden Spiegelzusammenbau führen. Außerdem sind die mechanischen Komponenten eines drehenden Spiegelzusammenbaus durch Fertigungsbeschränkungen und Kosten auf eine praktische Minimalgröße begrenzt. Die Größe eines rotierenden Spiegelzusammenbaus kann zu groß sein, um in einer gewünschten Gehäusegröße des Laser-Entfernungsmessers aufgenommen zu werden.

In der EP 1 321 777 A wird ein optischer Entfernungsmesser und ein Verfahren zur Bestimmung der Entfernung zwischen einem Objekt und einem Referenzpunkt gemäß den Oberbegriffen der Ansprüche 1 und 15 beschrieben. Er umfasst eine Lichtquelle in Form eines Lasers, ein drehbares Spiegelprisma zur kontrollierten Ablenkung des Lichts und eine Empfangsdiode, die von einem Objekt reflektiertes Licht nachweist und aus deren Signalen die Entfernung zum Objekt ermittelt wird. Um das abzubildende Objekt sind Referenzmarken verteilt. Zunächst wird das Objekt mit einer vergrößerten Strahldivergenz, die durch in den Strahlengang des Senders eingebrachte Linsenelemente erzielt wird, abgetastet. In denjenigen Bereichen, in denen Referenzmarken nachgewiesen wurden, werden Detailaufnahmen mit normaler Strahldivergenz durchgeführt. Als nachteilig ist neben dem relativ großen und schweren sowie nur eindimensional beweglichen Spiegelprisma, das zum Abtasten des Objekts eine Bewegung des ganzen Entfernungsmessers um eine zweite Achse erfordert, die zeit- und bauelementeaufwändige Aufweitung des Strahls mittels einzufügender Linsensysteme anzusehen.

Die EP 1 221 582 A und einige Veröffentlichungen (Ruffin, P. B., Optical MEMS-based arrays, Proceedings of the SPIE - the international society for optical engineering SPIE-Int. Soc. Opt. Eng. USA, Bd. 5055, Juli 2003, Seiten 230-241; Fainman, Y. et al., 3D quantitative imaging of the microvasculature with the Texas Instruments digital micromirror device, Proceedings of the SPIE - the international society for optical engineering SPIE-Int. Soc. Opt. Eng. USA, Bd. 4457, August 2001, Seiten 137-134; sowie Anagnostopoulos, G. P. et al., The electronics of a control system for micromirrors in a laser-scanning device, ICECS 2002, 9^{th} IEEE International conference on electronics, circuits and systems, Bd. 3, 15. September 2002, Seiten 1207 bis 1210) beschreiben die Verwendung von Mikrospiegeln zur gerichteten Ablenkung von Licht, jedoch ist in der EP 1 221 582 A nur ein einziger Mikrospiegel vorgesehen, während die Veröffentlichungen von Ruffin und Anagnostopoulos et al. keine mittels der Mikrospiegelelemente erzielte Strahlaufweitung erwähnen. Die Veröffentlichung von Fainman et al. schlägt eine Variation der Strahlbreite in einem Mikroskop mittels ansteuerbarer Mikrospiegel mit dem Ziel einer besseren Beleuchtung dunkler Proben vor, die den Fachmann nicht dazu führt, die Strahlbreite in dem hier vorliegenden Entfernungsmesser mittels der Spiegel zu variieren.

Die der Erfindung zu Grunde liegende Aufgabe wird darin gesehen, einen Laser-Entfernungsmesser bereitzustellen, der eine oder mehrere folgender Eigenschaften aufweist: schnelle oder Echtzeitantwort, die zur dynamischen Fahrzeugkontrolle geeignet ist, ein kompaktes Gehäuse, Widerstandsfähigkeit gegenüber Staub und anderen Feststoffpartikeln, und Zuverlässigkeit trotz einwirkender Vibrationen.

Diese Aufgabe wird erfindungsgemäß durch die Lehre der Patentansprüche 1 und 14 gelöst, wobei in den weiteren Patentansprüchen Merkmale aufgeführt sind, die die Lösung in vorteilhafter Weise weiterentwickeln.

Der optische Entfernungsmesser zur Bestimmung der Entfernung zu einem Objekt umfasst eine optische Quelle elektromagnetischer Strahlung. Ein fokussierendes optisches Element fokussiert oder kollimiert die elektromagnetische Strahlung auf eine Mikrospiegelanordnung oder -reihe. Ein Datenprozessor steuert die Mikrospiegelanordnung derart an, dass sie die fokussierte elektromagnetische Strahlung in eine definierte Richtung oder in einem definierten Strahlungsmuster abgibt. Eine Strahlverstellung legt die von der Mikrospiegelanordnung abgegebene Strahlgröße (z. B. Breite) des abgegebenen Strahls in einer interessierenden Raumregion fest, um ein gewünschtes Auflösungsniveau für diesen Raumbereich bereitzustellen. Ein optisches Übertragungselement fokussiert oder kollimiert den definierten Strahl auf ein Objekt. Ein optisches Empfangselement empfängt vom Objekt oder innerhalb eines interessierenden Felds reflektierte elektromagnetische Strahlung. Ein Detektor weist den Empfang reflektierter elektromagnetischer Strahlung nach. Ein Timer misst die Zeit, die zwischen dem Absenden der elektromagnetischen Strahlung zum Objekt und dem Empfang der elektromagnetischen Strahlung von irgendeinem Objekt innerhalb des Sichtbereichs, das hinreichend reflektierend und von geeigneter minimaler Größe ist, um einen Rücklauf elektromagnetischer Strahlung hinreichender Stärke zu erzeugen, vergangen ist. Ein Datenprozessor rechnet die vergangene Zeit in eine Entfernung zwischen dem Objekt und einem Referenzpunkt um.

Dabei wird zunächst ein größerer Bereich mit kleinerer Auflösung abgetastet. Anhand dieser ersten Abtastdaten werden eventuell vorhandene, interessierende kleinere Bereiche identifiziert, die anschließend mit höherer Auflösung abgetastet werden.

In den Zeichnungen sind drei nachfolgend näher beschriebene Ausführungsbeispiele der Erfindung dargestellt. Es zeigt:
- Fig. 1: ein Blockdiagramm einer Ausführungsform eines optischen Entfernungsmessers zur Abschätzung oder Bestimmung einer Entfernung zwischen einem Objekt und einem Referenzpunkt,
- Fig. 2: ein Flussdiagramm eines Verfahrens zur Bestimmung einer Entfernung oder eines Entfernungsbereichs eines Objekts von einem Referenzpunkt,
- Fig. 3: ein Blockdiagramm einer anderen Ausführungsform eines optischen Entfernungsmessers zur Abschätzung oder Bestimmung einer Entfernung von einem Objekt zu einem Referenzpunkt,
- Fig. 4: ein Flussdiagramm eines Verfahrens zur Einstellung der Strahlgröße eines definierten Strahlungsmusters zur Vergrößerung der Auflösung des optischen Entfernungsmessers,
- Fig. 5: ein Beispiel eines ersten Bildmusters, das von einem Entfernungsmesser detektiert wird,
- Fig. 6: ein Beispiel eines zweiten Bildmusters, das von einem Entfernungsmesser detektiert wird, und
- Fig. 7: eine weitere Ausführungsform eines optischen Entfernungsmessers.

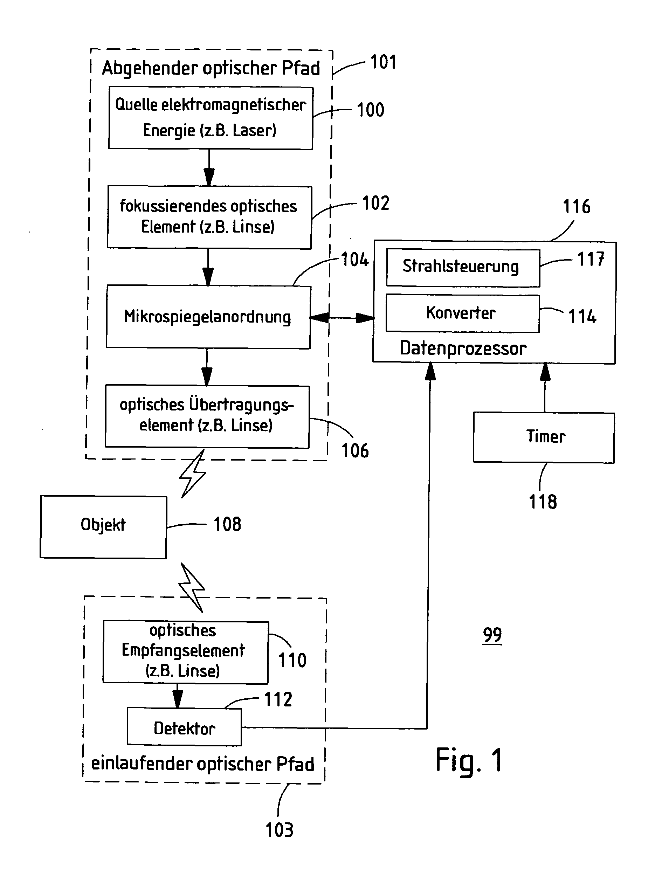

Die Figur 1 zeigt ein Blockdiagramm eines optischen Entfernungsmessers 99 zur Bestimmung der Entfernung zwischen einem Objekt 108 und einem Referenzpunkt. Der Referenzpunkt kann mit Bezug auf den Entfernungsmesser 99 oder einen Teil davon definiert sein. Der optische Entfernungsmesser 99 umfasst einen abgehenden optischen Pfad 101 und einen einlaufenden optischen Pfad 103. Der abgehende optische Pfad 101 steht mit einem elektromagnetischen Signal (z. B. einem Impuls oder einem Impulszug) in Beziehung, der vom Entfernungsmesser 99 auf ein Objekt 108 abgesandt wird, während der einlaufende optische Pfad 103 mit dem reflektierten elektromagnetischen Signal, das vom Entfernungsmesser 99 empfangen wird, in Beziehung steht. Der abgehende optische Pfad 101 umfasst eine Quelle 100 für elektromagnetische Energie, ein fokussierendes optisches Element 102, eine Mikrospiegelanordnung 104 und ein optisches Übertragungselement 106. Der einlaufende optische Pfad 103 umfasst ein optisches Empfangselement 110 und einen Detektor 112.

Der optische Entfernungsmesser 99 umfasst die Quelle 100 für elektromagnetische Energie (z. B. einen Laser), der elektromagnetische Energie auf das fokussierende optische Element 102 (z. B. eine Linse) abgibt. Die elektromagnetische Strahlung kann ein Infrarotstrahl, Nahinfrarot, Ultraviolett, rotes Licht, ein Strahl im sichtbaren Spektrum oder ein anderer Lichtstrahl sein.

Das fokussierende optische Element 102 fokussiert oder kollimiert die elektromagnetische Strahlung auf die Mikrospiegelanordnung 104. Das fokussierende optische Element 102 kann den Strahl aufweiten oder in einen parallelen Strahl formen. Ein Datenprozessor 116 steuert die Mikrospiegelanordnung 104, um die fokussierte elektromagnetische Strahlung (z. B. einen linearen Strahl) in eine definierte Richtung oder ein definiertes Strahlungsmuster zu leiten. Das optische Übertragungselement 106 fokussiert das definierte Strahlungsmuster auf das Objekt 108.

Das optische Empfangselement 110 ist angeordnet, elektromagnetische Strahlung zu empfangen, die vom Objekt 108 reflektiert wurde. Der Detektor 112 weist den Empfang von reflektierter elektromagnetischer Strahlung nach. Der Empfang des reflektierten Strahlungsmusters wird mit einer Empfangszeit verknüpft. Der Detektor 112 erzeugt beispielsweise ein Signal, das zur Intensität der empfangenen Strahlreflexion proportional ist. Ein Timer 118 stellt die Zeit fest, die zwischen einer Absendezeit einer Absendung der elektromagnetischen Strahlung (z. B. einem identifizierbaren oder nachverfolgbaren Impuls) zum Objekt 108 und einer Empfangszeit des Empfangs der elektromagnetischen Strahlung (z. B. einem identifizierbaren oder nachverfolgbaren Impuls) vom Objekt 108 verstrichen ist. Die Zeit, die zwischen dem Verlassen des Strahls vom Entfernungsmesser 99 und seiner Rückkehr zum Entfernungsmesser 99 verstrichen ist, wird zur Bestimmung der Entfernung zwischen dem Entfernungsmesser 99 und dem Objekt 108 verwendet. Der Datenprozessor 116 konvertiert die verstrichene Zeit in eine Entfernung zwischen dem Objekt 108 und einem Referenzpunkt, z. B. dem Entfernungsmesser 99. Wenn der Strahl mehrere Rückläufe generiert, indem er mehrere Objekte trifft, kann die vergangene Zeit als Ankunft des ersten Rücklaufs, des letzten Rücklaufs, des stärksten Rücklaufs, einem Durchschnitt oder Medianwert mehrerer Rückläufe, einem Modus mehrerer Rückläufe oder konsistent mit einem geeigneten, zuverlässigen Propagationsmodell oder anderen statistischen Modell gewertet werden. Die Entfernung (D) zum Objekt 108 oder einem anderen Reflexionspunkt in Metern entspricht der verstrichenen Zeit in Sekunden, geteilt durch 2 und multipliziert mit der Lichtgeschwindigkeit (c) in m/s. Das bedeutet, D = Tc/2.

In einer Ausführungsform überträgt die Quelle 100 elektromagnetischer Energie einen oder mehrere Impulse (z. B. einen identifizierbaren oder nachverfolgbaren Impuls) elektromagnetischer Strahlung und der Timer 118 registriert die Übertragungszeit. Bei einer anderen Ausführungsform kann die Quelle 100 verschiedene Frequenzen oder Frequenzbereiche sichtbaren Lichts übertragen, um die Bestimmung der Farbe des Objekts 108 basierend auf dem Vorhandensein oder Fehlen reflektierter elektromagnetischer Energie in Bezug zur abgesandten Frequenz des Entfernungsmessers 99 zu erleichtern. In noch einer anderen Ausführungsform weist die Quelle 100 einen Laser mit einer Ausgangsleistung auf, die als sicher angesehen wird, um Menschen mit ihr zu beaufschlagen, entsprechend anwendbarer technischer oder gesetzgeberischer Standards (z. B. US und internationalen Standards, Bundeskommunikationskommissionsregeln oder -gesetzen).

Bei einer Ausführungsform umfasst die Mikrospiegelanordnung 104 ein mikromechanisches Gerät, das die Ausgabe einer frei auswählbaren Strahlposition oder Strahlausrichtung und eine variable Strahlgröße unterstützt. Eine Mikrospiegelanordnung 104 kann beispielsweise ein mikro-elektromechanisches System, ein nachgiebiges mikro-elektromechanisches System oder ein anderes Gerät umfassen.

Die Mikrospiegelanordnung 104 umfasst Reihen reflektierender Elemente (z. B. Spiegel), die mit einem Substrat (z. B. einem Halbleitersubstrat) verbunden sind. Reflektierende Elemente können einzeln, gemeinsam, nacheinander oder in einer Kombination daraus mit Energie beaufschlagt werden, um eine gewünschte Fläche abzutasten (z. B. ein Sichtfeld). Jedes reflektierende Element kann über eine oder mehrere kapazitive Platten oder leitfähige Elemente beaufschlagt werden, um das reflektierende Element zu verformen und dadurch das reflektierende Element zu bewegen, die elektromagnetische Strahlung (z. B. Lichtstrahl) zu leiten. Mehr als ein reflektierendes Element kann die elektromagnetische Strahlung (z. B. den Lichtstrahl) gleichzeitig leiten, was einen größeren Strahl zur Folge hat, als wenn nur ein einzelnes reflektierendes Element die elektromagnetische Strahlung (z. B. Lichtstrahl) reflektiert.

Eine Strahlsteuerung 117 steuert die Mikrospiegelanordnung 104, um ein gesteuertes Strahlungsmuster zu erhalten. Das gesteuerte Strahlungsmuster kann eines der Folgenden sein: ein erstes Muster zum Abtasten eines Gesichtsfelds, ein zweites Muster zum Abdecken einer Probe des Gesichtsfelds, und ein drittes Muster zum Abdecken einer untergeordneten (kleineren) Fläche des Gesichtsfelds. Die Strahlsteuerung 117 legt eine Strahlbreite oder Strahlgröße des definierten Strahlungsmusters fest. Die Größe des ausgegebenen Strahls, seine Intensität oder beide können somit dynamisch abgestimmt werden, um eine interessierende Fläche abzutasten (z. B. eine globale interessierende Fläche oder eine lokale interessierende Fläche). Außerdem kann der Entfernungsmesser 99 eine Feinabstimmung eines Abtastwegs (z. B. eine Abtastlinie) oder einen Abtastweg mit größerer Auflösung bereitstellen, indem einige der aktiven reflektierenden Elemente, die den Strahl führen, gewechselt werden. Die Strahlsteuerung 117 kann den Strahl dynamisch anpassen, ohne Einschränkung durch die Drehgeschwindigkeit eines mehrseitigen mechanischen Spiegels der bekannten Systeme.

Bei einer Ausführungsform werden Elastomere zwischen dem reflektierenden Element und dem Substrat der Mikrospiegelanordnung 104 eingefügt, um die Antwortzeit zwischen einer Verformung und der Ruheposition zu verkürzen, nachdem das Element nicht mehr mit Energie beaufschlagt wird. Das mit dem reflektierenden Element verbundene Elastomer kann verwendet werden, um den Bewegungsbereich der reflektierenden Elemente zu vergrößern, was wiederum den Abtastwinkelbereich vergrößert. Das mit dem reflektierenden Element verbundene Elastomer kann die Energie oder Spannung verringern, die zur Steuerung der Mikrospiegelanordnung 104 benötigt wird. Mikrospiegelanordnungen 104 können durch Halbleiter- und integrierte Schaltkreisherstellungsverfahren hergestellt werden. Einzelheiten von Mikrospiegelanordnungen 104 können aus einem oder mehreren der Folgenden hergestellt sein: Silizium, Siliziumoxid, Siliziumnitrid, Aluminium, Silber und Nickel.

Die Neigung oder Bewegung der reflektierenden Elemente wird durch elektrostatische Ladungen gesteuert, die an Elektroden angelegt werden. Halbleiterschalter, wie komplementäre Metalloxidsiliziumtransistoren (CMOS), können verwendet werden, um die Position der reflektierenden Elemente durch elektrostatische Ablenkung zu steuern und die Position der reflektierenden Elemente durch kapazitives Abfühlen zu erfassen. Das kapazitive Abfühlen der Position der reflektierenden Elemente ermöglicht eine Rückkopplung zur Feinabstimmung der bevorzugten Ausrichtung der reflektierenden Elemente und der zum Erreichen einer derartigen Ausrichtung erforderlichen elektrischen Energie. Die Strahlsteuerung 117 kann Eingaben von einer kapazitiven Abfühlung annehmen und Halbleiterschalter oder einen Treiber aktivieren, um die an die Elektroden angelegten elektrostatischen Ladungen zu steuern.

Die Mikrospiegelanordnung 104 unterstützt eine Aktivierung von unterschiedlichen reflektierenden Elementen in virtuell jeder Reihenfolge (d. h. einer frei wählbaren Reihenfolge), um eine gewünschte Position der reflektierenden Elemente zu erreichen, anstelle eine bestimmte Bewegungsreihenfolge durchzulaufen, um eine gewünschte Position oder Winkelneigung eines Spiegels zu erreichen, wie es bei mechanischen Laser-Scannern erforderlich sein kann. Die Mikrospiegelanordnung 104 unterstützt daher einen dynamischen, freien Zugang zur Positionierung der Spiegel zur Erzeugung strukturierten Lichts. Die Mikrospiegelanordnung 104 kann Daten über eine interessierende Region oder Fläche hinsichtlich der Koordinaten, Intensität und Entfernung bereitstellen.

Ein Treiber kann zwischen der Strahlsteuerung 117 und der Mikrospiegelanordnung 104 angeordnet sein, um eine elektronische Schnittstelle zwischen der Strahlsteuerung 117 und der Mikrospiegelanordnung 104 bereitzustellen. Die Strahlsteuerung 117 kann ein Abtastmuster oder Beaufschlagungsmuster erstellen, um elektrische Energie an eines oder mehrere ausgewählte reflektierende Elemente der Mikrospiegelanordnung 104 abzugeben. Eine Mikrospiegelanordnung 104 kann beispielsweise derart angesteuert werden, dass es eine lineare Anordnung von Bildelementen oder anderen Mustern strukturierten Lichts projiziert. Der Treiber oder die Strahlsteuerung 117 können jedes nachfolgende Element der Mikrospiegelanordnung 104 aktivieren, noch bevor das Element aktuell benötigt wird, um die mit der Aktivierung und der Bewegung des Elements der Mikrospiegelanordnung 104 verbundene Verzögerung zu vermindern. Der zeitliche Versatz zwischen der Energiebeaufschlagung und der Aktivierung der nachfolgenden Elemente ist somit minimiert, was die Antwortzeit der Mikrospiegelanordnung reduziert. Die Mikrospiegelanordnung 104 stellt einen frei zugänglichen Zugang zur Spiegelpositionierung bereit, um fest strukturiertes Licht zu produzieren.

Die Strahlsteuerung 117 beaufschlagt die Mikrospiegelanordnung 104, um Impulse von Licht oder Strahlung bereitzustellen, wobei die Flugzeit von einem reflektierenden Hindernis oder anderen Objekt 108 gemessen wird. Die Mikrospiegelanordnung 104 unterstützt große Flexibilität und Effizienz bei der Bilddatensammlung. Beispielsweise sammelt ein erster Strahl mit einer kleineren Auflösung eine kleinere Menge an gerasterten Bilddatenpunkten (d. h. erste Abtastdaten) als ein zweiter Strahl mit einer größeren Auflösung. Die vom optischen Empfangselement 110 empfangene Reflexion des ersten Strahls kann genutzt werden, um zu identifizieren, wo Objekte 108 potentiellen Interesses liegen. Die vom optischen Empfangselement 110 empfangene Reflexion des zweiten Strahls mit höherer Abtastauflösung kann dann genutzt werden, um Daten höherer Dichte zu sammeln, die auf lokale interessierende Bereiche begrenzt sind. Es sind beträchtliche Verbesserungen der Effizienz der Datensammlung (z. B. Zeitersparnis) möglich, indem dem Abtastvorgang des ersten Strahls mit grober Auflösung ein zweiter Abtastvorgang hoher Auflösung mit dem zweiten Strahl folgt, anstelle einen Abtastvorgang der gesamten Szene mit hoher Auflösung durchzuführen und dann die voluminösen Daten von der Abtastung mit hoher Auflösung (z. B. der globalen interessierenden Fläche) zu verarbeiten, um Informationen über die interessierenden Flächen zu extrahieren. Bei einer Ausführungsform stellt die gesamte Szene eine Erntegutkante dar und die lokale interessierende Fläche stellt eine Lücke oder Unterbrechung in der Erntegutkante dar (z. B. durch verkrüppelten Pflanzenwuchs oder eine zuvor abgeerntete Fläche). Hier wird die lokale interessierende Fläche durch eine oder mehrere Diskontinuitäten in der Reflektivität der gesamten Szene oder Erntegutkante oder Diskontinuitäten bezüglich bestimmter Frequenzen abgestrahlten Lichts identifiziert.

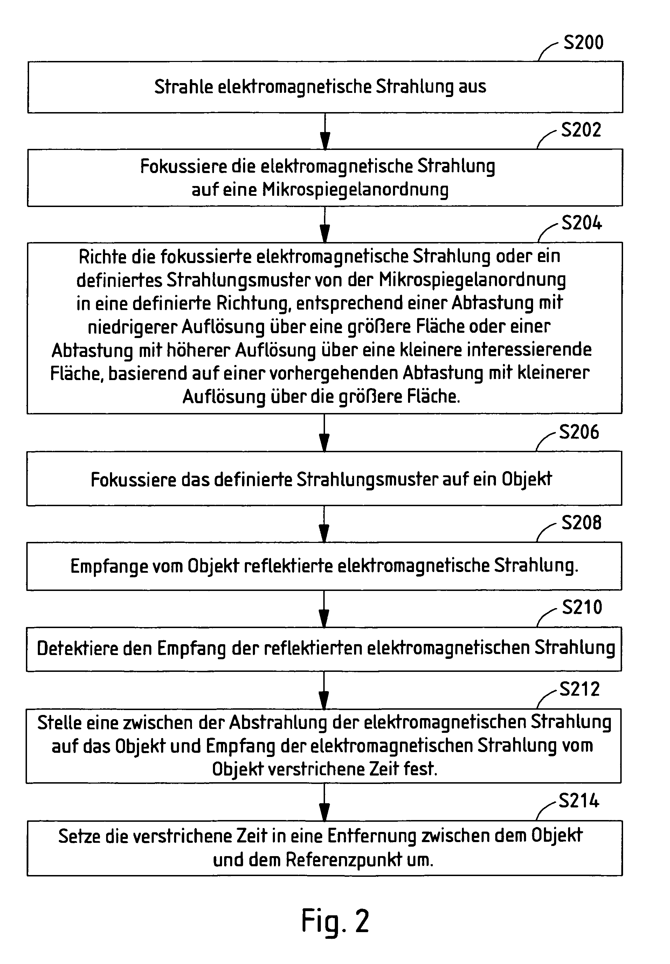

Die Figur 2 ist ein Flussdiagramm eines Verfahrens zur Feststellung einer Entfernung eines Objekts 108 von einem Bezugspunkt. Das Verfahren in Figur 2 beginnt mit dem Schritt S200.

Im Schritt 200 strahlt eine Quelle 100 für elektromagnetische Energie elektromagnetische Strahlung (z. B. einen Lichtstrahl). Ein Timer 118 kann den mit der Absendung eines identifizierbaren Impulses elektromagnetischer Strahlung vom Entfernungsmesser 99 verbundenen Zeitpunkt aufzeichnen.

Im Schritt S202 fokussiert ein fokussierendes optisches Element 102 die elektromagnetische Strahlung auf eine Mikrospiegelanordnung 104. In einem Beispiel kann eine Linse als fokussierendes optisches Element 102 die elektromagnetische Strahlung auf die Mikrospiegelanordnung 104 fokussieren. Bei einem anderen Beispiel fokussiert ein Beugungsgitter als fokussierendes optisches Element 102 die elektromagnetische Energie auf die Mikrospiegelanordnung 104.

Im Schritt S204 leitet die Mikrospiegelanordnung 104 die fokussierte elektromagnetische Strahlung in einer definierten Richtung oder einem definierten Strahlungsmuster auf ein Objekt 108 zu (z. B. eine Pflanze, ein Hindernis, Erntegut, Erntegutkante oder Stoppeln), entsprechend einem Abtastvorgang mit niedrigerer Auflösung über eine größere Fläche oder einem Abtastvorgang mit größerer Auflösung über eine kleinere interessierende Fläche, basierend auf einem vorherigen Abtastvorgang mit geringerer Auflösung über die größere Fläche.

Im Schritt S206 fokussiert das optische Übertragungselement 106 das definierte Strahlungsmuster auf ein Objekt 108. Eine Übertragungslinse fokussiert beispielsweise als optisches Übertragungselement 106 das definierte Strahlungsmuster.

Im Schritt 208 ist ein optisches Empfangselement 110 eingerichtet, elektromagnetische Strahlung (z. B. einen Lichtstrahl) zu empfangen, der von dem Objekt 108 reflektiert wurde, wenn das Objekt 108 von hinreichender physischer Größe und Reflektivität ist. Beispielsweise empfängt eine Empfängerlinse als optisches Empfangselement 110 elektromagnetische Strahlung, die vom Objekt 108 reflektiert wurde und fokussiert die empfangene elektromagnetische Strahlung auf einen Detektor 112. In einer Ausführungsform kann die elektromagnetische Strahlung gefiltert oder auf ein Filter angewandt werden, bevor sie auf den Detektor 112 trifft, um bestimmte Frequenzen der empfangenen elektromagnetischen Strahlung zurückzuweisen oder durchzulassen. Eine Filterung kann genutzt werden, um das Vorhandensein von Objekten mit bestimmten Farben nachzuweisen.

Im Schritt S210 detektiert der Detektor 112 den Empfang reflektierter, empfangener elektromagnetischer Strahlung. Die elektromagnetische Strahlung kann vom Objekt reflektiert worden sein. Der Detektor 112 kann beispielsweise ein ladungsgekoppeltes Bauelement (CCD), ein Cadmiumsulfidsensor, ein CMOS-Sensor oder ein anderer Sensor sein, der ein elektrisches Signal abgibt, wenn elektromagnetische Energie, wie Licht, auf den Detektor 112 fällt. Das abgegebene elektrische Signal kann verwendet werden, um eine Ankunfts- oder Empfangszeit festzustellen, die mit einem identifizierbaren Impuls verbunden ist. Der Timer 118 kann eine Ankunfts- oder Empfangszeit aufzeichnen, die mit dem Empfang eines identifizierbaren Impulses oder eines modulierten Signals elektromagnetischer Strahlung verbunden ist. Die Übertragungszeit und Empfangszeit des identifizierbaren Impulses oder modulierten Signals kann mit Bezug aufeinander (relativ) oder einem Referenzzeitrahmen (absolut) gemessen werden.

Im Schritt 212 stellt der Datenprozessor 116 eine vergangene Zeit fest, die zwischen einer Absendezeit der elektromagnetischen Strahlung auf das Objekt 108 und einer Empfangszeit des Empfangs der elektromagnetischen Strahlung vom Objekt 108 verstrichen ist.

Im Schritt 214 setzt der Datenprozessor 116 oder ein Konverter 114 die vergangene Zeit in eine Entfernung zwischen dem Objekt 108 und dem Referenzpunkt um. Die Entfernung zwischen dem Objekt 108 und dem Referenzpunkt kann als Eingabe eines Führungssystems eines Arbeitsfahrzeugs verwendet werden. Derartige Arbeitsfahrzeuge können landwirtschaftliche Maschinen wie Mähdrescher, Feldhäcksler und Traktoren, Baumaschinen, Forstmaschinen, wie Ernter und Forwarder, und Rasenpflegegeräte wie Mäher, und geländegängige Nutzfahrzeuge sein. Die Entfernung kann nach folgender Gleichung berechnet werden: D=Tc/2, wobei D die Entfernung zum Objekt in Metern, T die verstrichene Zeit und c die Lichtgeschwindigkeit ist.

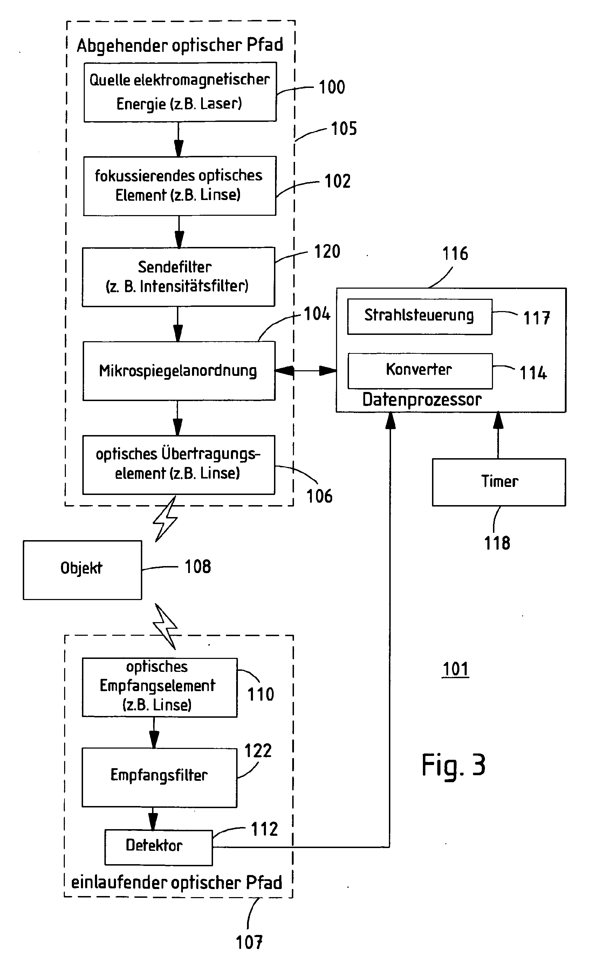

Die Figur 3 zeigt eine andere Ausführungsform eines Entfernungsmessers. Der Entfernungsmesser 101 nach Figur 3 ist dem Entfernungsmesser aus Figur 1 ähnlich, jedoch weist der Entfernungsmesser 101 aus Figur 3 ein Sendefilter 120 und ein Empfangsfilter 122 auf. Gleichartige Bezugszeichen in den Figuren 1 und 3 weisen auf gleichartige Elemente hin.

Der optische Entfernungsmesser 101 aus Figur 3 umfasst einen abgehenden optischen Pfad 105 und einen einlaufenden optischen Pfad 107. Der abgehende optische Pfad 105 steht mit einem elektromagnetischen Signal (z. B. einem Impuls oder einem Impulszug) in Beziehung, der vom Entfernungsmesser 101 auf ein Objekt 108 abgesandt wird, während der einlaufende optische Pfad 107 mit dem reflektierten elektromagnetischen Signal, das vom Entfernungsmesser 101 empfangen wird, in Beziehung steht. Der abgehende optische Pfad 105 umfasst eine Quelle 100 für elektromagnetische Energie, ein fokussierendes optisches Element 102, ein Sendefilter 120, eine Mikrospiegelanordnung 104 und ein optisches Übertragungselement 106. Der einlaufende optische Pfad 107 umfasst ein optisches Empfangselement 110, ein Empfangsfilter 122 und einen Detektor 112.

Bei einer Ausführungsform umfasst das Sendefilter 120 ein Intensitätsfilter. Das Intensitätsfilter kann durch eine Flüssigkristallanzeige oder eine drehbare Scheibe mit unterschiedlichen auswählbaren Durchlässigkeitsniveaus realisiert werden. Das Sendefilter 120 kann die ausgehende elektromagnetische Strahlung abschwächen, um für die Augen sichere Ausgangspegel der vom abgehenden optischen Pfad 105 abgesandten elektromagnetischen Strahlung zu erhalten. Das Intensitätsfilter kann die von der Quelle 100 elektromagnetischer Energie abgegebene Strahlung abschwächen, um die maximale Distanz zu begrenzen, aus der ein rücklaufendes Signal nachgewiesen werden kann. Das Intensitätsfilter kann entsprechend verwendet werden, um Objekte 108 außerhalb eines bestimmten interessierenden Bereichs auszufiltern. Es würde auch erlauben, die Abtastrate zu vergrößern, da die Zeit für jeden aufgenommenen Datenpunkt auf die maximale mittlere Gesamtlaufzeit zum weitest entfernten Objekt 108 begrenzt ist, das einen Rücklauf erzeugen kann. Das Sendefilter 120 kann auch zwischen der Mikrospiegelanordnung 104 und dem optischen Übertragungselement 106 angeordnet werden; in der dargestellten Position ist die Mikrospiegelanordnung 104 jedoch vor der zusätzlichen Hitze von der vollen elektromagnetischen Strahlung geschützt, die von der Quelle 100 erzeugt wird.

Bei einer anderen Ausführungsform weist das Sendefilter 120 ein frequenzselektives Filter auf, das eine bestimmte Frequenz elektromagnetischer Strahlung durchlässt oder zurückweist. Das Sendefilter 120 kann beispielsweise konfiguriert sein, grünes, rotes oder blaues Licht oder andere Farben zu sperren oder durchzulassen. Durch Austausch des Filters 120 mit einem anderen mit einer unterschiedlichen Frequenzantwort und einer Detektion der Amplitude der reflektierten Signale kann der Datenprozessor 116 eine ungefähre Farbe eines Objekts 108 abschätzen.

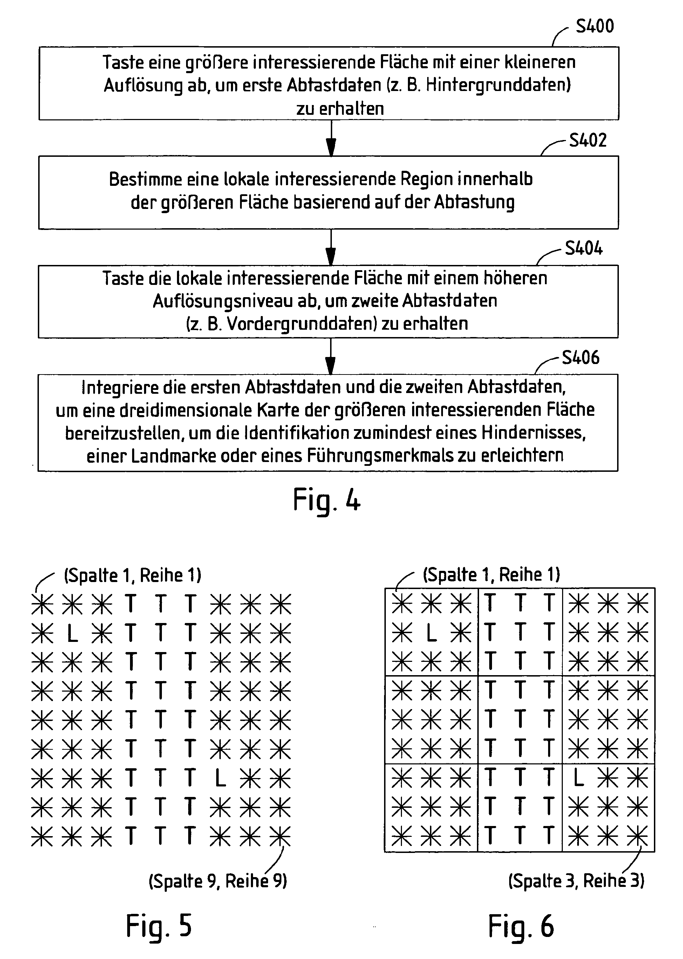

Die Figur 4 ist ein Flussdiagramm eines Verfahrens zur Feststellung, ob ein Abtastvorgang mit hoher oder niedriger Auflösung verwendet werden soll. Das Verfahren aus Figur 4 kann zur Ausführung des Schritts S204 aus Figur 2 angewandt werden. Das Verfahren aus Figur 4 beginnt im Schritt S400.

Im Schritt S400 wird eine größere interessierende Fläche mit einer kleineren Auflösung abgetastet, um erste Abtastdaten zu gewinnen. Die ersten Abtastdaten können Hintergrunddaten, Vordergrunddaten oder beide umfassen. Der Datenprozessor 116 könnte anhand der ersten Abtastdaten nicht hinreichende Informationen haben, um in den ersten Abtastdaten vollständig zwischen Hintergrunddaten und Vordergrunddaten zu unterscheiden. Ein Vordergrundobjekt ist vor einem Hintergrundobjekt angeordnet und näher am Entfernungsmesser (z. B. 99 oder 101).

Im Schritt S402 wird innerhalb der größeren Fläche basierend auf den ersten Abtastdaten eine lokale interessierende Fläche festgestellt. Die ersten Abtastdaten können ein oder mehrere Objekte (z. B. 108) oder potentielle Objekte in mehreren Entfernungen in einer globalen Abtastfläche identifizieren. Um das Vorhandensein und die Position der Objekte sicherzustellen oder zu überprüfen, wird die Größe (z. B. Breite) des abgesandten Strahls auf eine kleinere Strahlgröße vermindert.

Bei einer Ausführungsform repräsentiert der lokale interessierende Bereich eine oder mehrere Bereiche, in denen möglicherweise Vordergrundobjekte nachgewiesen wurden. Bei einem Beispiel ist die gerichtete Aufmerksamkeit dieser Erfindung besonders gut für den Waldbereich geeignet, wo Bäume als Hintergrundobjekte durch das Gebüsch im Vordergrund zu detektieren sein können. Das Gebüsch im Vordergrund kann durch eine oder mehrere Objekte im Vordergrund repräsentiert werden.

Falls kein Vordergrundobjekt vorhanden oder potentiell vorhanden ist, kann die lokale interessierende Region einen Teil des Hintergrundobjekts oder einen Diskontinuitätsbereich zwischen einem oder mehreren Hintergrundobjekten darstellen. Eine Diskontinuität kann eine größere Änderung in der Amplitude der empfangenen elektromagnetischen Strahlung oder Reflexion darstellen. Außerdem kann die Diskontinuität eine Änderung in der Amplitude für eine besondere Frequenz (z. B. grünem Licht) oder einem Frequenzband der empfangenen elektromagnetischen Strahlung darstellen. Beispielsweise repräsentiert eine globale interessierende Region eine Erntegutkante und eine Diskontinuität darin eine lokale interessierende Fläche. Die Erntegutkante kann eine erste Lichtfrequenz reflektieren, während die Diskontinuität die erste Lichtfrequenz nicht reflektiert oder eine zweite Lichtfrequenz reflektiert, die sich von der ersten Lichtfrequenz unterscheidet.

Im Schritt S404 wird eine lokale interessierende Fläche mit einem höheren Auflösungsniveau abgetastet, um zweite Abtastdaten zu erhalten (z. B. Vordergrunddaten). Der Datenprozessor 116 oder die Strahlsteuerung 117 kann beispielsweise die Aufmerksamkeit des Strahls über eine Abtastung mit höherer Auflösung mit einer engeren Strahlgröße (z. B. über eine lokale interessierende Fläche) bewegen, basierend auf dem Rücklaufsignal von einem weiteren Strahlimpuls oder einem modulierten Signal der ersten Abtastung. Falls es die Umgebung zulässt, unterstützt die zweite Abtastung oder die mit höherer Auflösung durchgeführte Abtastung die Unterscheidung von Hintergrundobjekten von Vordergrundobjekten kleinerer physischer Größe als die Abtastung mit kleinerer Auflösung. Außerdem unterstützt die höhere Auflösung die Unterscheidung von Objekten aufgrund der höheren Auflösung.

Der Schritt S404 kann in einer Vielzahl unterschiedlicher Arten durchgeführt werden. Beispielsweise kann die Strahlsteuerung 117 selbsttätig durch selektive Ansteuerung der Mikrospiegelanordnung 104 die Strahlgröße vermindern, um den elektromagnetischen Strahl vom Entfernungsmesser 101 über eine globale interessierende Fläche oder bei der höheren Auflösung eine lokale interessierende Fläche zu fokussieren. Die Mikrospiegelanordnung 104 unterstützt eine frei zugängliche Abtastung und eine Größeneinstellung des vom Entfernungsmesser (z. B. 99 oder 101) abgegebenen Strahls während des Flugs oder der Fahrt. Die Auflösungsverstellung ermöglicht, zuerst eine ganze globale Region mit kleinerer Auflösung und zweitens eine lokale interessierende Region mit größerer Auflösung abzutasten. Keine mechanische Linsenanpassung und keine Ausrichtung der rotierenden Spiegel über einen kompletten Bewegungsbereich wie beim Stand der Technik ist erforderlich.

Im Schritt 406 werden die ersten Abtastdaten in die zweiten Abtastdaten integriert, um eine zwei- oder dreidimensionale Karte der größeren interessierenden Fläche bereitzustellen und die Identifikation zumindest eines Objekts, einer Landmarke oder eines Führungsmerkmals zu erleichtern. Die zwei- oder dreidimensionale Karte kann zum Aufbau eines Wegplans für ein Fahrzeug (z. B. ein autonomes oder unbemanntes Fahrzeug) verwendet werden.

In der Figur 4 kann die Entscheidung, ob ein engerer Strahl mit höherer Auflösung oder ein größerer Strahl mit geringerer Auflösung verwendet werden soll, davon abhängen, ob die größere Auflösung irgendwelche zusätzliche Information bereitstellt. Wenn der engere Strahl immer verwendet würde, würde die Menge der gesammelten Daten ansteigen. Die mit dem Datenprozessor 116 verbundene Datenverarbeitungs- und Speicherkapazität wäre zur Unterstützung der Menge der gesammelten Daten zu konfigurieren. Die Zeit zur Sammlung der Daten vom globalen interessierenden Bereich würde auch ansteigen, da die gesammelten Daten wahrscheinlich auch zu anderen Flächen außerhalb der lokalen interessierenden Fläche gehören würden.

Die Figur 5 stellt eine Darstellung von Daten einer ersten Abtastung dar, während die Figur 6 eine Darstellung von Daten einer zweiten Abtastung darstellt. Die ersten Abtastdaten können Bilddaten in einem rechteckigen Bereich (z. B. 22,86 cm mal 22,86 cm in der realen Welt) darstellen, ausgedrückt in Spalten und Zeilen. Die ersten Abtastdaten können durch eine größere Strahlgröße (z. B. 7,62 cm mal 7,62 cm) aufgenommen werden, während die zweiten Abtastdaten durch eine kleinere Strahlgröße (z. B. 2,54 mal 2,54 cm) aufgenommen werden. Wie in der Figur 5 dargestellt, enthalten die ersten Abtastdaten ein großes Hintergrundobjekt und ein oder mehrere kleine Vordergrundobjekte innerhalb einer globalen interessierenden Region. Das große Hintergrundobjekt kann ein Baumstumpf sein, während die Vordergrundobjekte eine oder mehrere Blätter umfassen.

Die rechteckige Region der ersten Abtastdaten aus Figur 5 kann in ein Gitter oder eine Zellenanordnung mit Elementen, die durch Zeilen- und Spaltenkoordinaten identifiziert werden, aufgeteilt werden. Wie dargestellt, gibt es neun Zeilen und neun Spalten, obwohl in der Praxis jegliche Anzahlen an Zeilen und Spalten vorhanden sein könnten. Es wird angenommen, dass es Blätter (L) mit jeweils folgenden Koordinaten und Entfernungen gibt: (Spalte zwei, Zeile zwei) bei etwa 6 Metern vom Entfernungsmesser; (Spalte vier, Zeile vier) bei etwa 6,09 m vom Entfernungsmesser, das den Baumstumpf enthält, und (Spalte sieben, Zeile sieben) bei etwa 6,18 m vom Entfernungsmesser. Außerdem befindet sich ein Baumstumpf (T) in den Spalten vier bis sechs bei etwa 6,3 m vom Entfernungsmesser. Jedes der in Figur 6 gezeigten Blätter oder Baumstümpfe ist von hinreichender physischer Größe und Reflektivität, um ein ausreichendes rücklaufendes Signal im Entfernungsmesser zu erzeugen und auf das Vorhandensein eines Objekts hinzuweisen.

In einer beispielhaften Ausführungsform wird der Datenprozessor 116 oder die Strahlsteuerung 117 des Entfernungsmessers 99 oder 101 anfänglich auf eine große Strahlgröße (z. B. ein rechteckiger Strahl mit 22,86 cm Kantenlänge) oder eine Betriebsart kleiner Auflösung für eine allgemein interessierende Region im Abstand von etwa 6 bis 6,3 m vom Entfernungsmesser gestellt. In der Betriebsart kleinerer Auflösung kann der Entfernungsmesser einen ersten Rücklauf von einem Blatt bei Zeile 2, Spalte 2 bei etwa 6 m feststellen und den letzten Rücklauf vom Baumstumpf bei etwa 6,3 m oder beide. Die kleineren Vordergrundobjekte vor dem Baumstumpf könnten durch den Entfernungsmesser nicht erkannt werden. Außerdem könnte der Entfernungsmesser nicht in der Lage sein, zwischen dem kleinen Vordergrundobjekt und dem Hintergrundobjekt zu unterscheiden.

Die Figur 6 stellt einen Fall dar, in dem das Hintergrundobjekt oder ein Abschnitt davon innerhalb eines lokalen, interessierenden Felds identifiziert wird. Das lokale interessierende Feld der Figur 6 stellt ein Kästchen oder eine Zeilen-Spalten-Kombination in Figur 6 dar. Es gibt neun potentielle lokale interessierende Felder in Figur 6, die aus drei Zeilen und drei Spalten ausgewählt werden könnten, obwohl beliebige Anzahlen von Zeilen und Spalten verwendbar sind. Der Entfernungsmesser kann auf eine kleinere Strahlbreite (z. b. rechteckig mit 2,54 mal 2,54 cm²) mit einer höheren Auflösung eingestellt werden, um die zweiten Abtastdaten im lokalen interessierenden Feld zu erhalten. Das Rücklaufsignal wird auf einer Flugzeitbasis aufgelöst, so dass innerhalb der kleineren Strahlbreite oder höheren Auflösung Objekte detektiert werden, die sich etwa 6 m vom Entfernungsmesser, 6,09 m vom Entfernungsmesser, 6,18 m vom Entfernungsmesser und 6,3 m vom Entfernungsmesser befinden. Blätter werden in Spalte eins, Zeile eins, Spalte zwei, Zeile zwei und Spalte drei, Zeile drei identifiziert. Der Baumstumpf wird in Spalte 2, Zeilen eins bis drei einschließlich nachgewiesen.

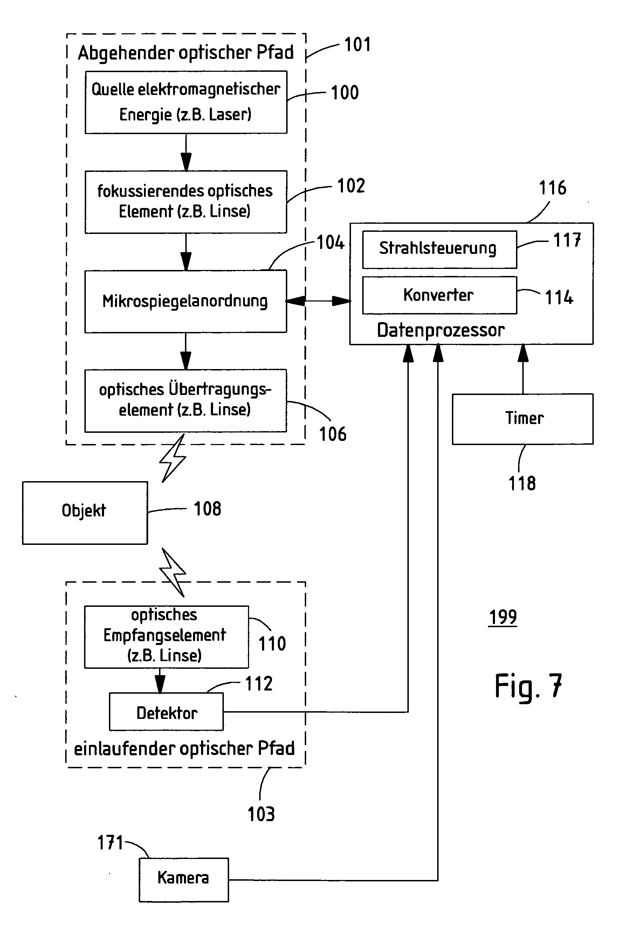

Die Figur 7 stellt eine andere Ausführungsform eines Entfernungsmessers 199 dar. Der Entfernungsmesser 199 aus Figur 7 ist ähnlich dem Entfernungsmesser 99 der Figur 1, jedoch umfasst der Entfernungsmesser 199 aus Figur 7 weiterhin eine optische Kamera 171. Die optische Kamera 171 kann verwendet werden, um Regionen gleicher Farbe zu identifizieren, die Oberflächen bei gegebenen Entfernungen entsprechen können. Obwohl eine Farbkamera ein Farbsignal ausgeben kann, das eine Rotkomponente, eine Grünkomponente und eine Blaukomponente enthält, kann die Farbkamera in einer alternativen Ausführungsform eine Nahinfrarotkomponente oder ein Nahinfrarotsignal anstelle der oder zusätzlich zu der Rot-, Grün- und Blaukomponente bereitstellen. Das Farbsignal kann einen Intensitätswert der Bildelemente oder Gruppen von Bildelementen für jede zugehörige Rotkomponente, Grünkomponente und Blaukomponente für die abgetastete Fläche bereitstellen. Im oben genannten Beispiel kann angenommen werden, das die Blätter grün sind, der Baumstumpf braun und der Himmel im Hintergrund blau. Falls die optische Kamera 171 und der Laserstrahl kalibriert und koordiniert wären, würde die Verarbeitung des Kamerabilds durch den Datenprozessor 119 zwei blaue Regionen an jeder Seite des Baumstumpfs, drei grüne Regionen, an denen sich die Blätter befänden, und die braune Region, an der sich der Baumstumpf befindet, zeigen. Die im Kamerabild identifizierten Regionen könnten als erste Schätzwerte dafür verwendet werden, wo die mehreren Entfernungen in der größeren rechteckigen Strahlbreite zu analysieren wären.

## Patentansprüche

1. Optischer Entfernungsmesser (99, 101, 199) zur Messung der Entfernung zwischen dem Entfernungsmesser (99, 101, 199) und einem Objekt (108), mit einer Quelle (100) zum Erzeugen eines Strahls elektromagnetischer Energie, einem fokussierenden optischen Element (102) zur Fokussierung oder Kollimation des Strahls, einer Spiegelanordnung zum Empfangen des Strahls vom fokussierenden optischen Element (102) und zur Abgabe eines steuerbaren Strahls, einem Datenprozessor (116) zur Auswahl eines Auflösungsniveaus eines vom Entfernungsmesser (99, 101, 199) abgegebenen Strahls basierend auf einer vorhergehenden Abtastung mit geringerer Auflösung über eine größere Fläche, und einem optischen Übertragungselement (106) zur Fokussierung oder Kollimation des steuerbaren Strahls auf ein Objekt (108) zur Abschätzung der Entfernung zwischen dem Objekt (108) und dem Entfernungsmesser (99, 101, 199) basierend auf der zwischen der Absendung der elektromagnetischen Strahlung auf das Objekt (108) und dem Empfang der elektromagnetischen Strahlung vom Objekt (108) verstrichenen Zeit, **dadurch gekennzeichnet, dass** die Spiegelanordnung eine Mikrospiegelanordnung (104) ist, und dass die Mikrospiegelanordnung (104) mittels des Datenprozessors (116) betreibbar ist, das Auflösungsniveau durch Festlegung der Strahlgröße des steuerbaren Strahls zu definieren,
wobei die Strahlgröße durch die Reflexionsbeiträge mehrerer reflektierender Elemente der Mikrospiegelanordnung bestimmt wird.

2. Optischer Entfernungsmesser (99, 101, 199) nach Anspruch 1, **dadurch gekennzeichnet, dass** die Mikrospiegelanordnung (104) ein mikroelektromechanisches System ist.

3. Optischer Entfernungsmesser (99, 101, 199) nach Anspruch 1 oder 2, **dadurch gekennzeichnet, dass** die Mikrospiegelanordnung (104) eine Reihe deformierbarer reflektierender Elemente umfasst, die mit einer Strahlsteuerung (117) verbunden sind, welche die deformierbaren reflektierenden Elemente steuert, um die Richtung des steuerbaren Strahls vorzugeben.

4. Optischer Entfernungsmesser (99, 101, 199) nach Anspruch 3, **dadurch gekennzeichnet, dass** die Strahlsteuerung (117) betreibbar ist, Elemente der Mikrospiegelanordnung (104) schon vor dem Zeitpunkt zu aktivieren, an dem eine Positionsänderung der Elemente wirklich erforderlich ist, um die Antwortzeit der Mikrospiegelanordnung (104) zu vermindern.

5. Optischer Entfernungsmesser (99, 101, 199) nach einem der Ansprüche 1 bis 4, **dadurch gekennzeichnet, dass** der steuerbare Strahl einen ersten Strahl mit einer geringeren Auflösung und einen zweiten Strahl mit einer höheren Auflösung umfasst, wobei der erste Strahl erste Abtastdaten zur Identifikation einer lokalen interessierenden Fläche innerhalb einer globalen Fläche bereitstellt und die Daten der zweiten Abtastung mit der lokalen interessierenden Fläche in Beziehung stehen.

6. Optischer Entfernungsmesser (99, 101, 199) nach einem der Ansprüche 1 bis 5, **dadurch gekennzeichnet, dass** die Quelle (100) elektromagnetischer Energie einen Laser umfasst, dass das fokussierende optische Element (102) eine Linse umfasst, und dass das optische Übertragungselement (106) eine Linse umfasst.

7. Optischer Entfernungsmesser (101) nach einem der Ansprüche 1 bis 6, **dadurch gekennzeichnet, dass** ein Intensitätsfilter (120) im Weg des steuerbaren Strahlungsmusters angeordnet ist, um die maximale Entfernung der globalen interessierenden Fläche und/oder der lokalen interessierenden Fläche zu begrenzen.

8. Optischer Entfernungsmesser (101) nach einem der Ansprüche 1 bis 5, **dadurch gekennzeichnet, dass** die Quelle (100) verschiedene Frequenzen oder Frequenzbereiche sichtbaren Lichts überträgt und dass ein Intensitätsfilter (122) im Weg des vom Objekt (108) reflektierten steuerbaren Strahls angeordnet ist, um den vom Objekt (108) reflektierten Strahl zwecks Abschätzung einer ungefähren Farbe des Objekts (108) zu filtern.

9. Optischer Entfernungsmesser (99, 101, 199) nach einem der vorhergehenden Ansprüche, **dadurch gekennzeichnet, dass** eine erste Abtastung auf ein Hintergrundobjekt und ein potentielles Vordergrundobjekt gerichtet wird, und dass ein zweiter Abtastvorgang auf das potentielle Vordergrundobjekt gerichtet wird, um das Vorhandensein oder Nichtvorhandensein des potentiellen Vordergrundobjekts zu überprüfen.

10. Optischer Entfernungsmesser (99, 101, 199) nach einem der vorhergehenden Ansprüche, **dadurch gekennzeichnet, dass** erste Abtastdaten sich auf eine globale interessierende Region beziehen und eine zweite Abtastung sich auf eine lokale interessierende Region bezieht, wobei die interessierende lokale Region sich auf eine mit einem Objekt (108) verbundene Diskontinuität bezieht, welche eine wesentliche Änderung der Amplitude des vom Objekt (108) reflektierten Strahlungsmusters oder eine Abwesenheit der Reflexion innerhalb einer vorbestimmten Nachbarschaft des Objekts (108) wiedergibt.

11. Optischer Entfernungsmesser (99, 101, 199) nach Anspruch 11, **dadurch gekennzeichnet, dass** die Diskontinuität eine Unterbrechung oder Störung in einer Erntegutkante auf einem Feld wiedergibt.

12. Optischer Entfernungsmesser (99, 101, 199) nach einem der Ansprüche 1 bis 12, **dadurch gekennzeichnet, dass** eine Farbkamera (171) verwendet wird, um Regionen ähnlicher Farbe zu identifizieren, die Oberflächen des Objekts (108) bei gegebenen Entfernungen entsprechen könnten.

13. Optischer Entfernungsmesser (99, 101, 199) nach einem der Ansprüche 1 bis 12, **dadurch gekennzeichnet, dass** ein optisches Empfangselement (110) zur Aufnahme einer Reflexion des steuerbaren Strahlungsmusters vom Objekt (108), ein Detektor (112) zum Empfang der Reflexion und Bereitstellung eines Ausgangssignals an den Datenprozessor (116) und ein mit dem Datenprozessor (116) verbundener Timer (118) zur Bestimmung einer zwischen dem Absenden eines identifizierbaren Impulses elektromagnetischer Strahlung von der Quelle (100) und dem Empfang der Reflexion des identifizierbaren Impulses am Detektor (112) verstrichenen Zeit, die auf die Entfernung zwischen dem Entfernungsmesser (99, 101, 199) und dem Objekt (108) hinweist, vorgesehen sind.

14. Verfahren zur Bestimmung der Entfernung zwischen einem Objekt (108) und einem Referenzpunkt, mit folgenden Schritten:
Abstrahlen elektromagnetischer Strahlung,
Fokussieren der elektromagnetischen Strahlung auf eine Spiegelanordnung,
Richten der fokussierten elektromagnetischen Strahlung von der Spiegelanordnung in einer definierten Richtung oder einem definierten Strahlungsmuster auf ein Objekt (108),
entsprechend einer Abtastung mit geringerer Auflösung über eine größere Fläche oder einer Abtastung, die auf einer vorhergehenden Abtastung mit geringerer Auflösung basiert,
mit höherer Auflösung über eine kleinere interessierende Fläche,
Empfangen vom Objekt (108) reflektierter elektromagnetischer Strahlung,
Detektion des Empfangs reflektierter elektromagnetischer Strahlung,
Feststellung einer zwischen der Absendung der elektromagnetischen Strahlung auf das Objekt (108) und dem Empfang der elektromagnetischen Strahlung vom Objekt (108) verstrichenen Zeit, und
Umrechnen der verstrichenen Zeit in eine Entfernung zwischen dem Objekt und dem Referenzpunkt,
**dadurch gekennzeichnet, dass** die Spiegelanordnung eine Mikrospiegelanordnung (104) ist, und dass die Auflösung des auf das Objekt (108) gerichteten Stahls durch die Mikrospiegelanordnung (104)
durch Festlegung der Strahlgröße definiert wird, wobei die Strahlgröße durch die Reflexionsbeiträge mehrerer reflektierender Elemente der Mikrospiegelanordnung bestimmt wird.

15. Verfahren nach Anspruch 14, **dadurch gekennzeichnet, dass** die abgestrahlte elektromagnetische Strahlung gefiltert wird, um die Intensität der auf die Mikrospiegelanordnung (104) einfallenden elektromagnetischen Strahlung zu steuern.

16. Verfahren nach Anspruch 14 oder 15, **dadurch gekennzeichnet, dass** die reflektierte elektromagnetische Strahlung gefiltert wird, um die Intensität der auf einen Detektor (112) einfallenden elektromagnetischen Strahlung zu steuern.

17. Verfahren nach einem der Ansprüche 14 bis 16, **dadurch gekennzeichnet, dass** die reflektierte elektromagnetische Strahlung in frequenzselektiver Weise gefiltert wird, um eine ungefähre Farbe des Objekts abzuschätzen.

18. Verfahren nach einem der Ansprüche 14 bis 17, **dadurch gekennzeichnet, dass** die Abtastung mit geringerer Auflösung auf ein Hintergrundobjekt und ein potentielles Vordergrundobjekt gerichtet wird, und dass die Abtastung mit höherer Auflösung auf das potentielle Vordergrundobjekt gerichtet wird, um das Vorhandensein oder Fehlen des potentiellen Vordergrundobjekts an einer speziellen Raumposition zu überprüfen.

19. Verfahren nach einem der Ansprüche 14 bis 18, **dadurch gekennzeichnet, dass** erste Abtastdaten sich auf eine globale interessierende Region beziehen und eine zweite Abtastung sich auf eine lokale interessierende Region bezieht.

20. Verfahren nach Anspruch 19, **dadurch gekennzeichnet, dass** die interessierende lokale Region sich auf eine mit einem Objekt (108) verbundene Diskontinuität bezieht, welche eine wesentliche Änderung der Amplitude des vom Objekt (108) reflektierten Strahlungsmusters oder eine Abwesenheit der Reflexion innerhalb einer vorbestimmten Nachbarschaft des Objekts (108) wiedergibt.

21. Verfahren nach einem der Ansprüche 14 bis 20, **dadurch gekennzeichnet, dass** die Diskontinuität eine Unterbrechung oder Störung in einer Erntegutkante auf einem Feld wiedergibt.

22. Verfahren nach einem der Ansprüche 14 bis 21, **dadurch gekennzeichnet, dass** die Quelle (100) verschiedene Frequenzen oder Frequenzbereiche sichtbaren Lichts überträgt, und dass Regionen ähnlicher Farben identifiziert werden, die Oberflächen des Objekts (108) bei gegebener Entfernung entsprechen.

23. Verfahren nach einem der Ansprüche 14 bis 22, **dadurch gekennzeichnet, dass** zur Bestimmung der Farbe des Objekts (108) eine Rotkomponente und/oder eine Grünkomponente und/oder eine Blaukomponente und/oder eine Infrarotkomponente der reflektierten Strahlung verarbeitet wird.

## Claims

1. Optical rangefinder (99, 101, 199) for measuring the distance between the rangefinder (99, 101, 199) and an object (108), comprising a source (100) for generating an electromagnetic-energy beam, a focusing optical element (102) for focusing or collimating the beam, a mirror arrangement for receiving the beam from the focusing optical element (102) and for emitting a controllable beam, a data processor (116) for selecting a resolution level of a beam emitted by the rangefinder (99, 101, 199) on the basis of a preceding lower-resolution scan over a larger area and an optical transmission element (106) for focusing or collimating the controllable beam onto an object (108) for estimating the distance between the object (108) and the rangefinder (99, 101, 199) on the basis of the time elapsed between the emission of the electromagnetic radiation to the object (108) and the reception of the electromagnetic radiation from the object (108), **characterized in that** the mirror arrangement is a micromirror arrangement (104) and **in that** the micromirror arrangement (104) can be operated by means of the data processor (116) so as to define the resolution level by setting the beam dimension of the controllable beam, the beam dimension being determined by the reflection contributions of a plurality of reflecting elements of the micromirror arrangement.

2. Optical rangefinder (99, 101, 199) according to Claim 1, **characterized in that** the micromirror arrangement (104) is a microelectromechanical system.

3. Optical rangefinder (99, 101, 199) according to Claim 1 or 2, **characterized in that** the micromirror arrangement (104) comprises a row of deformable reflecting elements, which are connected to a beam control (117) that controls the deformable reflecting elements in order to prescribe the direction of the controllable beam.

4. Optical rangefinder (99, 101, 199) according to Claim 3, **characterized in that** the beam control (117) can be operated so as already to activate elements of the micromirror arrangement (104) before the time at which a positional change of the elements is in fact necessary in order to reduce the response time of the micromirror arrangement (104).

5. Optical rangefinder (99, 101, 199) according to one of Claims 1 to 4, **characterized in that** the controllable beam comprises a first beam with a lower resolution and a second beam with a higher resolution, the first beam providing first scanning data for identifying a local area of interest within a global area and the data from the second scan being in relation to the local area of interest.

6. Optical rangefinder (99, 101, 199) according to one of Claims 1 to 5, **characterized in that** the source (100) of electromagnetic energy comprises a laser, **in that** the focusing optical element (102) comprises a lens and **in that** the optical transmission element (106) comprises a lens.

7. Optical rangefinder (101) according to one of Claims 1 to 6, **characterized in that** an intensity filter (120) is arranged in the path of the controllable radiation pattern in order to restrict the maximum distance of the global area or interest and/or the local area of interest.

8. Optical rangefinder (101) according to one of Claims 1 to 5, **characterized in that** the source (100) transmits various frequencies or frequency ranges of visible light and **in that** an intensity filter (122) is arranged in the path of the controllable beam reflected by the object (108) in order to filter the beam reflected by the object (108) in order to estimate an approximate colour of the object (108).

9. Optical rangefinder (99, 101, 199) according to one of the preceding claims, **characterized in that** a first scan is directed at a background object and a potential foreground object and **in that** a second scanning process is directed at the potential foreground object in order to check the existence or non-existence of the potential foreground object.

10. Optical rangefinder (99, 101, 199) according to one of the preceding claims, **characterized in that** the first scanning data relate to a global region of interest and a second scan relates to a local region of interest, the local region of interest relating to a discontinuity connected to the object (108), said discontinuity expressing a significant change in the amplitude of the radiation pattern reflected by the object (108) or a lack of the reflection within a predetermined neighbourhood of the object (108).

11. Optical rangefinder (99, 101, 199) according to Claim 10, **characterized in that** the discontinuity expresses an interruption or fault in a crop edge on a field.

12. Optical rangefinder (99, 101, 199) according to one of Claims 1 to 11, **characterized in that** a colour camera (171) is used to identify regions with a similar colour, which could correspond to surfaces of the object (108) at given distances.

13. Optical rangefinder (99, 101, 199) according to one of Claims 1 to 12, **characterized in that** provision is made for an optical reception element (110) for recording a reflection of the controllable radiation pattern from the object (108), a detector (112) for receiving the reflection and providing an output signal for the data processor (116) and a timer (118), connected to the data processor (116), for determining a time elapsed between the emission of an identifiable pulse of electromagnetic radiation from the source (100) and the reception of the reflection of the identifiable pulse at the detector (112), which time indicates the distance between the rangefinder (99, 101, 199) and the object (108).

14. Method for determining the distance between an object (108) and a reference point, comprising the following steps:
emitting electromagnetic radiation,
focusing the electromagnetic radiation onto a mirror arrangement,
directing the focused electromagnetic radiation from the mirror arrangement in a defined direction or a defined radiation pattern onto an object (108), corresponding to a scan with a lower resolution over a greater area or a scan, based on a preceding scan with a lower resolution, with a higher resolution over a smaller area of interest,
receiving electromagnetic radiation reflected by the object (108),
detecting the reception of reflected electromagnetic radiation,
determining a time elapsed between the emission of the electromagnetic radiation to the object (108) and the reception of the electromagnetic radiation from the object (108), and
converting the elapsed time into a distance between the object and the reference point,
**characterized in that** the mirror arrangement is a micromirror arrangement (104) and **in that** the resolution of the beam directed at the object (108) is defined by the micromirror arrangement (104) by setting the beam dimension, the beam dimension being determined by the reflection contributions of a plurality of reflecting elements of the micromirror arrangement.

15. Method according to Claim 14, **characterized in that** the emitted electromagnetic radiation is filtered in order to control the intensity of the electromagnetic radiation impinging on the micromirror arrangement (104).

16. Method according to Claim 14 or 15, **characterized in that** the reflected electromagnetic radiation is filtered in order to control the intensity of the electromagnetic radiation impinging on a detector (112).

17. Method according to one of Claims 14 to 16, **characterized in that** the reflected electromagnetic radiation is filtered in a frequency-selective fashion in order to estimate an approximate colour of the object.

18. Method according to one of Claims 14 to 17, **characterized in that** the scan with a lower resolution is directed at a background object and a potential foreground object and **in that** the scan with a higher resolution is directed at the potential foreground object in order to check the existence or lack of the potential foreground object at a specific position in space.

19. Method according to one of Claims 14 to 18, **characterized in that** the first scanning data relate to a global region of interest and a second scan relates to a local region of interest.

20. Method according to Claim 19, **characterized in that** the local region of interest relates to a discontinuity connected to an object (108), said discontinuity expressing a significant change in the amplitude of the radiation pattern reflected by the object (108) or a lack of the reflection within a predetermined neighbourhood of the object (108).

21. Method according to one of Claims 14 to 20, **characterized in that** the discontinuity expresses an interruption or fault in a crop edge on a field.

22. Method according to one of Claims 14 to 21, **characterized in that** the source (100) transmits various frequencies or frequency ranges of visible light and **in that** regions with similar colours are identified, which correspond to surfaces of the object (108) at a given distance.

23. Method according to one of Claims 14 to 22, **characterized in that** a red component and/or a green component and/or a blue component and/or an infrared component of the reflected radiation is processed in order to determine the colour of the object (108).

## Revendications

1. Télémètre optique (99, 101, 199) destiné à mesurer la distance entre le télémètre (99, 101, 199) et un objet (108), comprenant une source (100) destinée à générer un faisceau d'énergie électromagnétique, un élément optique de focalisation (102) destiné à focaliser ou à collimater le faisceau, un ensemble à miroirs destiné à recevoir le faisceau en provenance de l'élément optique de focalisation (102) et à délivrer un faisceau orientable, un processeur de données (116) destiné à sélectionner un niveau de résolution d'un faisceau émis par le télémètre (99, 101, 199) sur la base d'un balayage précédent effectué avec une résolution inférieure sur une zone plus étendue, et un élément de transmission optique (106) destiné à focaliser ou à collimater le faisceau orientable sur un objet (108) pour estimer la distance entre l'objet (108) et le télémètre (99, 101, 199) sur la base du temps s'étant écoulé entre l'émission du rayonnement électromagnétique vers l'objet (108) et la réception du rayonnement électromagnétique en provenance de l'objet (108), **caractérisé en ce que** l'ensemble à miroirs est un ensemble de micromiroirs (104) et **en ce que** l'ensemble de micromiroirs (104) peut être actionné au moyen du processeur de données (116) pour définir le niveau de résolution par détermination de la taille du faisceau orientable, la taille du faisceau étant déterminée à partir des contributions à la réflexion de plusieurs éléments réfléchissants de l'ensemble de micromiroirs.

2. Télémètre optique (99, 101, 199) selon la revendication 1, **caractérisé en ce que** l'ensemble de micromiroirs (104) est un système micro-électromécanique.

3. Télémètre optique (99, 101, 199) selon la revendication 1 ou 2, **caractérisé en ce que** l'ensemble de micromiroirs (104) comprend une série d'éléments réfléchissants déformables qui sont liés à un dispositif de commande de faisceau (117), qui commande les éléments réfléchissants déformables afin d'imposer la direction du faisceau orientable.

4. Télémètre optique (99, 101, 199) selon la revendication 3, **caractérisé en ce que** le dispositif de commande de faisceau (117) peut être actionné afin d'activer des éléments de l'ensemble de micromiroirs (104) avant l'instant où une modification de position des éléments devient effectivement nécessaire afin de diminuer le temps de réponse de l'ensemble de micromiroirs (104).

5. Télémètre optique (99, 101, 199) selon l'une quelconque des revendications 1 à 4, **caractérisé en ce que** le faisceau orientable comprend un premier faisceau ayant une plus faible résolution et un second faisceau ayant une plus haute résolution, dans lequel le premier faisceau fournit des premières données de balayage destinées à identifier une zone d'intérêt locale à l'intérieur d'une zone globale et dans lequel les données du second balayage sont liées à la région d'intérêt locale.

6. Télémètre optique (99, 101, 199) selon l'une quelconque des revendications 1 à 5, **caractérisé en ce que** la source (100) d'énergie électromagnétique comprend un laser, **en ce que** l'élément optique de focalisation (102) comprend une lentille et **en ce que** l'élément de transmission optique (106) comprend une lentille.

7. Télémètre optique (101) selon l'une quelconque des revendications 1 à 6, **caractérisé en ce qu'**un filtre d'intensité (120) est disposé sur le trajet du diagramme de rayonnement orientable afin de limiter la distance maximale de la région d'intérêt globale et/ou de la région d'intérêt locale.

8. Télémètre optique (101) selon l'une quelconque des revendications 1 à 5, **caractérisé en ce que** la source (100) transmet différentes fréquences ou plages de fréquences de lumière visible et **en ce qu'**un filtre d'intensité (122) est disposé sur le trajet du faisceau orientable réfléchi par l'objet (108) afin de filtrer le faisceau réfléchi par l'objet (108) dans le but d'estimer une couleur approximative de l'objet (108).

9. Télémètre optique (99, 101, 199) selon l'une quelconque des revendications précédentes, **caractérisé en ce qu'**un premier balayage est dirigé vers un objet d'arrière-plan et vers un objet de premier plan potentiel et **en ce qu'**un second processus de balayage est dirigé vers l'objet de premier plan potentiel afin de contrôler la présence ou l'absence de l'objet de premier plan potentiel.

10. Télémètre optique (99, 101, 199) selon l'une quelconque des revendications précédentes, **caractérisé en ce que** des premières données de balayage concernent une région d'intérêt globale et **en ce qu'**un second balayage concerne une région d'intérêt locale, la région d'intérêt locale étant associée à une discontinuité liée à un objet (108) qui traduit une modification notable de l'amplitude du diagramme de rayonnement réfléchi par l'objet (108) ou une absence de réflexion à l'intérieur d'un voisinage prédéterminé de l'objet (108).

11. Télémètre optique (99, 101, 199) selon la revendication 10, **caractérisé en ce que** la discontinuité traduit une interruption ou une perturbation d'un bord de produit à récolter dans un champ.

12. Télémètre optique (99, 101, 199) selon l'une quelconque des revendications 1 à 11, **caractérisé en ce qu'**une caméra couleur (171) est utilisée pour identifier des régions de couleurs semblables qui pourraient correspondre aux surfaces de l'objet (108) à des distances données.

13. Télémètre optique (99, 101, 199) selon l'une quelconque des revendications 1 à 12, **caractérisé en ce qu'**il est prévu un élément de réception optique (110) destiné à acquérir une réflexion du diagramme de rayonnement orientable en provenance de l'objet (108), un détecteur (112) destiné à recevoir la réflexion et la fourniture d'un signal de sortie du processeur de données (116) et un temporisateur (118) relié au processeur de données (116) pour déterminer un temps s'étant écoulé entre l'émission d'une impulsion identifiable de rayonnement électromagnétique par la source (100) et la réception de la réflexion de l'impulsion identifiable par le détecteur (112), lequel temps est représentatif de la distance entre le télémètre (99, 101, 199) et l'objet (108).

14. Procédé de détermination de la distance entre un objet (108) et un point de référence, comprenant les étapes suivantes :
émettre un rayonnement électromagnétique,
focaliser le rayonnement électromagnétique sur un ensemble à miroirs,
diriger le rayonnement électromagnétique focalisé depuis l'ensemble à miroirs, dans une direction définie ou selon un diagramme de rayonnement défini, vers un objet (108) en correspondance avec un balayage de faible résolution sur une zone plus étendue ou avec un balayage qui est fondé sur un balayage précédent de plus faible résolution, avec une résolution plus élevée dans une zone d'intérêt plus petite,
recevoir en provenance de l'objet (108) un rayonnement électromagnétique réfléchi,
détecter la réception du rayonnement électromagnétique réfléchi,
déterminer un temps s'étant écoulé entre l'émission du rayonnement électromagnétique vers l'objet (108) et la réception du rayonnement électromagnétique en provenance de l'objet (108), et
convertir le temps s'étant écoulé en une distance entre l'objet et le point de référence,
**caractérisé en ce que** l'ensemble à miroirs est un ensemble de micromiroirs (104) et **en ce que** la résolution du faisceau dirigé vers l'objet (108) est définie par l'ensemble de micromiroirs (104) par détermination de la taille du faisceau, la taille du faisceau étant déterminée par la contribution à la réflexion de plusieurs éléments réfléchissants de l'ensemble de micromiroirs.

15. Procédé selon la revendication 14, **caractérisé en ce que** le rayonnement électromagnétique émis est filtré pour commander l'intensité du rayonnement électromagnétique incident sur l'ensemble de micromiroirs (104).

16. Procédé selon la revendication 14 ou 15, **caractérisé en ce que** le rayonnement électromagnétique réfléchi est filtré afin de commander l'intensité du rayonnement électromagnétique incident sur un détecteur (112).

17. Procédé selon l'une quelconque des revendications 14 à 16, **caractérisé en ce que** le rayonnement électromagnétique réfléchi est filtré de manière sélective en fréquence afin d'estimer une couleur approximative de l'objet.

18. Procédé selon l'une quelconque des revendications 14 à 17, **caractérisé en ce que** le balayage de plus faible résolution est dirigé vers un objet d'arrière-plan et vers un objet de premier plan potentiel, et **en ce que** le balayage de plus haute résolution est dirigé vers l'objet de premier plan potentiel afin de contrôler la présence ou l'absence de l'objet de premier plan potentiel à une position spatiale spécifique.

19. Procédé selon l'une quelconque des revendications 14 à 18, **caractérisé en ce que** les premières données de balayage concernent une région d'intérêt globale et **en ce qu'**un second balayage concerne une région d'intérêt locale.

20. Procédé selon la revendication 19, **caractérisé en ce que** la région d'intérêt locale concerne une discontinuité liée à un objet (108), qui traduit une modification notable de l'amplitude du diagramme de rayonnement réfléchi par l'objet (108) ou une absence de réflexion à l'intérieur d'un voisinage prédéterminé de l'objet (108).

21. Procédé selon l'une quelconque des revendications 14 à 20, **caractérisé en ce que** la discontinuité traduit une interruption ou une perturbation d'un bord de produit à récolter dans un champ.

22. Procédé selon l'une quelconque des revendications 14 à 21, **caractérisé en ce que** la source (100) transmet une lumière à des fréquences différentes ou dans des plages de fréquences différentes et **en ce qu'**on identifie des régions de couleurs semblables qui correspondent à des surfaces de l'objet (108) à une distance donnée.

23. Procédé selon l'une quelconque des revendications 14 à 22, **caractérisé en ce qu'**une composante rouge et/ou une composante verte et/ou une composante bleue et/ou une composante infrarouge du rayonnement réfléchi est traitée pour déterminer la couleur de l'objet (108).
